# EUROPÄISCHE PATENTSCHRIFT

(11) **EP 0 361 120 B1**
(45) Veröffentlichungstag und Bekanntmachung des Hinweises auf die Patenterteilung: **13.04.1994**
(21) Anmeldenummer: 89116097.0
(22) Anmeldetag: 31.08.1989
(51) Int. Cl.: A46B 5/06, A46B 3/18

(54) **Dentalbürste**
Toothbrush
Brosse à dents

(30) Priorität: 27.09.1988 CH 3571/88
(43) Veröffentlichungstag der Anmeldung: 04.04.1990
(73) Patentinhaber: CURADEN AG, CH-6010 Kriens (CH)
(72) Erfinder: Breitschmid, Ulrich, CH-6010 Kriens (CH)
(74) Vertreter: Keller, René, Dr.

(56) Entgegenhaltungen:
- WO-A-86/02532
- US-A- 3 720 975
- US-A- 4 280 518

## Beschreibung

Die Erfindung betrifft eine Dentalbürste mit einem aus einer verdrillten Drahtschleife bestehenden Borstenträger und einem borstenlosen Endteil. Durch die EP-A-0 203 082 ist eine Dentalbürste der betreffenden, im Oberbegriff des Anspruchs 1 genannten Art bekannt.

Dentalbürsten dieser Art werden u. a. zum manuellen Reinigen von Zahnzwischenräumen verwendet oder in eine rotierende Klemmvorrichtung am vorderen Ende eines Griffels zur Reinigung von Zahnzwischenräumen, sowie von Wurzelkanalpräparationen bei einer Zahnwurzelbehandlung eingesetzt. Die Zahnzwischenräume sind oftmals, insbesondere bei den hinteren Backenzähnen, schwer zugänglich, auch ist ihr Verlauf von der Backen- zur Mundinnenseite meistens nicht ersichtlich. Da infolgedessen eine exakte Führung der Bürste nicht möglich ist, kann sie sich verklemmen. Bei Befreiungsversuchen kann die Dentalbürste abbrechen. Eine abgebrochene Dentalbürste hat eine scharfkantige Bruchstelle, die leicht an der Backeninnenseite und/oder der Zunge zu Verletzungen führen kann. In vielen Fällen läßt sich der abgebrochene Teil nur mit einem Werkzeug, z. B. einer Zange entfernen.

Beim manuellen Reinigen wird die bekannte Dentalbürste an ihrem geraden borstenlosen Endteil zwischen zwei Fingern gehalten und während des Reinigungsvorgangs mit den Fingern in dem betreffenden Zahnzwischenraum hin und her bewegt, wobei sich die bekannte Dentalbürste allerdings nur schlecht mit den Fingern führen und halten läßt.

Bei der Wurzelkanalpräparation wird die in eine Aufschlemmung von Bimsstein getauchte Dentalbürste in den Wurzelkanal langsam rotierend eingeführt und auf und ab bewegt. Hierdurch werden Reste eines provisorisch eingebrachten Zements entfernt. Anschließend wird der Kanal mit Reinigungsmitteln von Gewebeteilchen. Debris und Dentinresten gesäubert, und dann durch Einbringen von Ethylalkohol getrocknet. Das Einbringen von Flüssigkeiten in den Kanal und das Herausholen von Material aus dem Kanal erfolgt mit unterschiedlicher Drehrichtung der Dentalbürste. Die Kanäle sind oftmals schwer zugänglich und die mechanischen Beanspruchungen aufgrund der behinderten Zugänglichkeit und der Änderung des Drehsinns hoch. Hierdurch kann die Dentalbürste ebenfalls leicht abbrechen. Eine abgebrochene Dentalbürste in einem Wurzelkanal läßt sich, wie erwähnt, nur mit Aufwand und Unbequemlichkeiten für den Patienten entfernen.

Aufgabe der Erfindung ist es, die Gefahr des Abbrechens der Dentalbürste zu verringern und deren gute Halterung und Führung zu gewährleisten.

Die erfindungsgemäße Lösung dieser Aufgabe ist Gegenstand des Patentanspruchs 1. Gegenstände der Ansprüche 2 bis 10 sind bevorzugte Ausführungsformen der erfindungsgemäßen Dentalbürste.

Durch die in Längsrichtung federnden Auslenkungen der Dentalbürste kann sich der Borstenträger entsprechend dem Verlauf des zu reinigenden Zahnzwischenraums bzw. Wurzelkanals ausrichten, so daß die Gefahr eines Verklemmens verringert wird. Sollte sich der Borstenträger trotzdem in einem engen Zwischenraum bzw. Kanal verklemmen, wird bei der Hin- und Herbewegung der verklemmten Bürste in ihrer Halterung, insbesondere in ihrem Schaft, nicht mehr ein einziger Abbiegepunkt, sondern ein Bereich beansprucht, in dem der Draht des Bürstenträgers gebogen wird. Hierdurch reduziert sich die plastische Verformung des Drahts und die Gefahr seines Brechens wird signifikant vermindert. Durch die Auslenkungen ist in einfacher Weise eine drehfeste Halterung bzw. eine Lagerung der Dentalbürste in einem schlitzförmigem Hohlraum im Schaft ermöglicht.

Die federnden Auslenkungen der Dentalbürste dienen bei manueller Verwendung gleichzeitig als Griffläche zwischen Daumen und Zeigefinger, wodurch deren gute Halterung und ebenfalls deren gute seitliche Führung gewährleistet ist.

In einer bevorzugten Auführungsform sind die federnden Auslenkungen in einer Ebene angeordnet. Hierdurch ergibt sich eine Haltefläche, mit der die Dentalbürste gut zwischen Daumen und Zeigefinger zur Reinigung von Zahnzwischenräumen gehalten und geführt werden kann. Auch vereinfacht sich hierdurch die Gestaltung eines den Borstenträger drehfest haltenden Schafts.

In einer weiteren bevorzugten Auführungsform sind die Auslenkungen zick-zack-, wellen- oder mäanderförmig ausgebildet. Durch die Formgebung der Auslenkung und die Wahl des Befestigungspunkts des freien Endes des borstenlosen Teils im Schaft kann die Federwirkung des Borstenträgers und der Biegeradius des Drahtes beeinflußt werden.

Im folgenden werden Ausführungsbeispiele der erfindungsgemäßen Vorrichtung anhand der Zeichnungen näher erläutert. Es zeigen:
- Fig. 1: eine Draufsicht auf eine Dentalbürste,
- Fig. 2: das Halten und Führen der Dentalbürste zwischen Zeigefinger und Daumen,
- Fig. 3: eine teilweise in Längsrichtung geschnittene andere Dentalbürste, wobei deren Borstenträger zick-zack-förmige Auslenkungen an seinem borstenlosen Endteil hat und mit einem Stift im Schaft gehalten ist,
- Fig. 4: einen Querschnitt entlang der Linie IV - IV in Figur 3 durch den Schaft.
- Fig. 5: einen Ausschnitt eines um neunzig Grad in der Längsachse der Dentalbürste gedrehten Längsschnitts der in Fig. 3 dargestellten Dentalbürste,
- Fig. 6: einen Längsschnitt durch eine Variante der Dentalbürste analog Fig. 5, aber mit mäanderförmigen Auslenkungen am borstenlosen Endteil, der an seinem freien Ende im Schaft eingeklebt ist und
- Fig. 7: einen Längsschnitt durch einen stabförmigen Griff mit eingesetzter Dentalbürste.

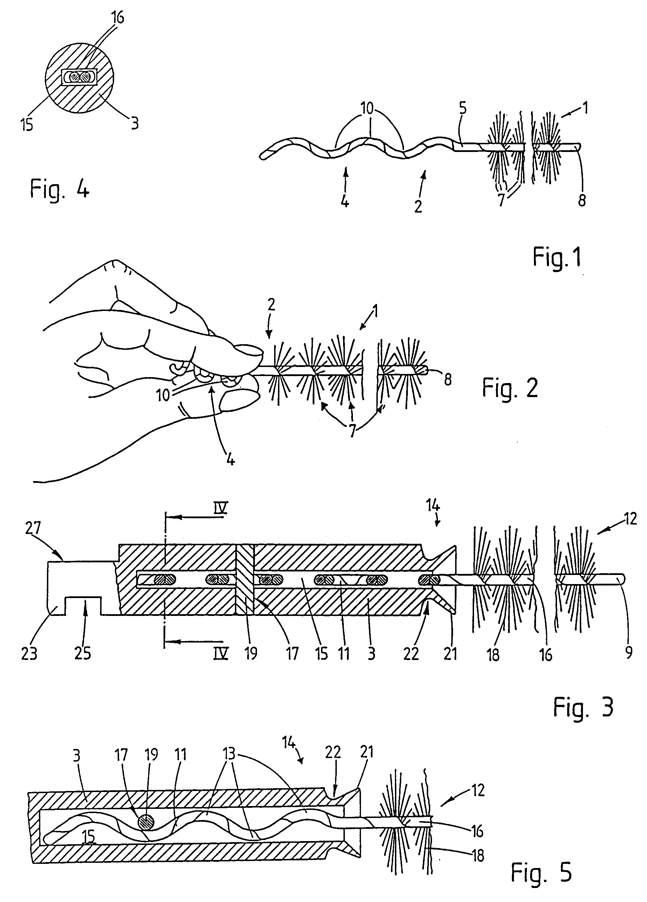

Die in **Figur 1** dargestellte, einstückig aus einer verdrillten Drahtschleife 5 gebildete Dentalbürste **2** hat einen geraden Borstenträger **1** und einen borstenlosen Endteil **4**. Zwischen den beiden Drähten sind im Borstenträger **1** Borsten **7** zentrisch eingeklemmt. Durch die Verdrillung der beiden Drähte liegen die Borsten **7** auf einer Schraubenlinie. Der Umkehrpunkt der beiden Drähte befindet sich am freien Ende **8** des Borstenteils **1**. Hierdurch ist das freie Ende **8** des Borstenträgers **1** abgerundet.

Nur annähernd die Hälfte der Länge der Dentalbürste **2** hat Borsten **7**. Die andere Hälfte, der borstenlose Endteil **4**, ist zick-zack- oder wellenförmig gebogen. Die zick-zack- oder wellenförmigen Auslenkungen **10** sind zur Achse des Borstenträgers **1** symmetrisch und liegen alle in einer Ebene.

Zur Reinigung von Zahnzwischenräumen wird, wie in **Figur 2** dargestellt, der borstenlose Endteil **4** zwischen Zeigefinger und Daumen gehalten. Die Auslenkungen **10** bilden hierbei eine gute Griffläche zur Halterung und Führung der Dentalbürste **2**. Aufgrund der Elastizität der Auslenkungen **10** wird die zum Reinigen aufgewandte Kraft flächig von den Fingern übertragen. Durch die runden Fingerkuppen werden kleine Biegeradien bei Richtungsänderungen vermieden, wodurch sich eine extrem große Sicherheit gegenüber Abbrechen der Drahtschleife **5** ergibt.

Die in **den Figuren 3, 4** und **5** dargestellte Dentalbürste **14** hat eine verdrillte Drahtschleife **16** mit einem borstenlosen Endteil **11** und einem geraden Borstenträger **12**, sowie einem zylindrischen Kunststoffschaft **3**. Die Borsten **18** sind analog zur Dentalbürste **2** angeordnet. Der Umkehrpunkt der beiden Drähte befindet sich auch hier am freien Ende **9** des Borstenträgers **12**, wodurch dieses ebenfalls abgerundet ist. Der borstenlose Endteil **11** hat ebenfalls symmetrisch zur Achse des Borstenträgers **12** in einer Ebene liegende, zick-zackförmigen Auslenkungen **13** und sitzt mit einer losen Spielpassung in einem schlitzförmigem Hohlraum **15** mit quaderförmigem Querschnitt im Schaft **3**. In seiner hinteren Hälfte hat der Schaft **3** ein Durchgangsloch **17**, das die beiden breiteren Seiten des Hohlraums **15** im hinteren Drittel durchstößt. In diesem Loch **17** ist ein Stift **19** festgeklemmt, der in die zweithinterste Auslenkung **13** eingreift und die Drahtschleife **16** damit gegen Herausrutschen aus dem Schaft **3** sichert.

Durch eine äußere radiale Nut **22** am oberen Ende des Schafts **3** wird ein trichterförmiger Ansatz **21** gebildet. Die Innenseite des Trichters **21** geht in den quaderförmigen Hohlraum **15** über und erleichtert das Einführen des Endteils **11** in den Hohlraum **15**. Sie bewirkt außerdem eine Vergrößerung des Biegeradius der verdrillten Drahtschleife **16**. An seinem anderen Ende hat der Schaft **3** einen radialen Ansatz **23** und eine radiale Nut **25**. Von beiden und einem kleinen anschließenden Teil des Schafts **3** ist ein Segment derart abgeschnitten, daß, wie in **Figur 3** dargestellt, eine Fläche **27** parallel zur Achse der Dentalbürste **14** entsteht. Der Ansatz **23** und die Nut **25** fassen in eine (nicht dargestellte) Klemmvorrichtung eines (nicht dargestellten) Griffels einer (nicht dargestellten) Bohrmaschine drehfest, wobei die Fläche **27** zur Kraftübertragung der Drehbewegung auf den Schaft **3** dient.

Vom Schaft **3** wird die Drehbewegung auf die Borsten **18** der Drahtschleife **16** über die an den breiten Flächen des Hohlraums **15** anliegenden Auslenkungen **13** übertragen.

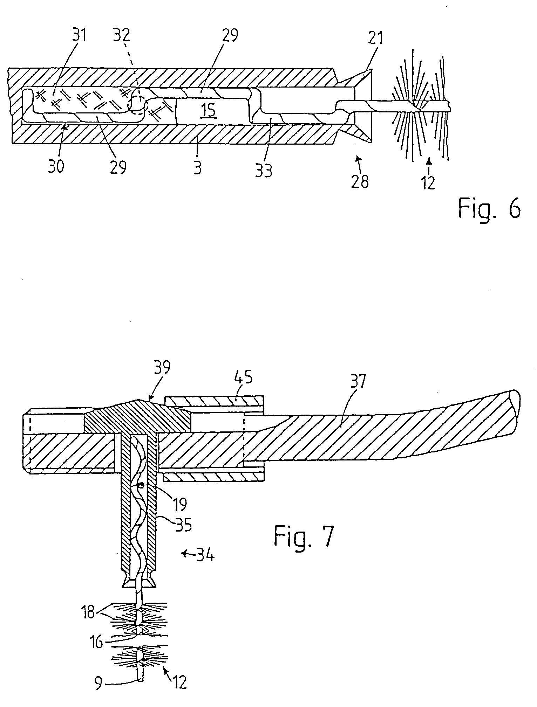

Bei der in **Figur 6** dargestellten Variante einer Dentalbürste **28** sind die zick-zack-förmigen Auslenkungen **13** der Drahtschleife **5** bzw. **16** durch mäanderförmige Auslenkungen **29** einer Drahtschleife **33** ersetzt. Das freie Ende eines borstenlosen Endteils **30** im hinteren Teil des Hohlraums **15** ist eingeleimt. Der Leim **31** wird durch ein als Leimeinfülloch dienendes Loch **32** eingebracht. Er kann auch durch die Öffnung des Trichters **21** eingefüllt werden; es sollte allerdings in diesem Fall darauf geachtet werden, daß sich kein Leim **31** im vorderen Teil des Schafts **3** befindet, damit die Drahtschleife **33** nur an ihrem borstenlosen Endteil **30** fixiert ist.

Die Drahtschleife **33** bzw. **16**, ob eingeleimt oder mit dem Stift **19** befestigt, wird immer im Bereich ihres freien, den Borsten **18** abgewandten Endes des Endteils **30** bzw. **11** gehalten. Aufgrund der besonderen Formgebung des borstenlosen Teils **30** bzw. **11** ist der Borstenträger **12** federnd im Schaft **3** gehalten. Die Größe der Federkonstanten ist einerseits durch den Wert des Elastizitätskoeffizienten des Drahtmaterials gegeben, und andererseits durch die Art der Formgebung des borstenlosen Teils **11** bzw. **30**. Bei gleichem Material ist die Drahtschleife **16** mit einem zick-zack-förmigen Endteil **11** steifer als die Drahtschleife **33** mit mäanderförmiger Verformung.

Es können neben mäander-, zick-zack- bzw. wellenförmigen Auslenkungen **29** und **13** zur Achse des Borstenträgers **12** auch anders geformte Auslenkungen verwendet werden. Obige Formen haben sich aber in Anbetracht des verhältnismäßig geringen Platzes im Hohlraum **15** bewährt.

Anstatt die Drahtschleife **16** bzw. **33** mit einem Stift **19** oder mit Leim **31** zu halten, kann beim Spritzvorgang des Schafts **3** der den Borsten **18** abgewandte Teil des Endteils **11** bzw. **30** eingegossen werden.

Zum Reinigen von Zahnzwischenräumen oder Wurzelkanälen sitzt der Schaft **3** drehend im (nicht dargestellten) Griffel der (nicht dargestellten) Bohrmaschine. Der Verlauf der Zahnzwischenräume ist von außen nicht einsehbar, bzw. der Wurzelkanal oftmals schwer zugänglich, d. h. der verdrillte Draht des Borstenträgers **12** wird beim Reinigen abgebogen. Durch die Formgebung des trichterförmigen Ansatzes **21** und die federnde Wirkung des borstenlosen Endteils **11** bzw. **30** wird nun erreicht, daß bei einer unvermeidlichen Abbiegung des verdrillten Drahtes **16** erstens der Punkt der Abbiegung durch die federnde Wirkung des Endteils **11** bzw. **30** nicht immer an derselben Stelle liegt, und daß zweitens durch die Bewegung des Biegepunkts und die Formgebung des Ansatzes **21** der Biegeradius vergrößert wird. Hierdurch wird die Gefahr eines Bruchs der Drahtschleife **16** drastisch verringert.

Die in **Figur 7** dargestellte Dentalbürste **34** hat am geschlossenen Ende ihres Schafts **35** eine Traverse **39** anstelle des Ansatzes **23** am Schaft **3**. Dieser Schaft **35** läßt sich in einen stabförmigen Griff **37** einer Vorrichtung zum Reinigen von Zahnzwischenräumen, wie in der EP-B 0 203 082 beschrieben, einsetzen und mit einer Gewindehülse **45** befestigen.

Auch diese Dentalbürste 34 hat die oben beschriebenen Vorzüge.

Als Vorteil der oben beschriebenen Dentalbürsten **2, 14, 28** und **34** ist noch zu erwähnen, daß die Dentalbürste **2** identisch zu den in den Dentalbürsten **14, 28** und **34** verwendeten mit Borsten **18** besetzten Drahtschleifen **16** bzw. **33** ausführbar ist. Ferner läßt sich das Leimeinfülloch **32** im Schaft **3** bzw. **35** identisch zur Bohrung für den Stift **19** ausführen. Durch diese konstruktiven Gegebenheiten sind die einzelnen Baugruppen vielseitig verwendbar.

Die Dentalbürsten **2, 14, 28**, und **34** lassen sich nicht nur zur Reinigung von Zahnzwischenräumen und zur Wurzelkanalpräparation, sondern auch zur Reinigung beliebiger Zwischenräume wie sie z. B. in der Feinmechanik zwischen Komponenten, Relaiskontakten, Schaltlamellen, etc. auftreten, verwenden.

## Patentansprüche

1. Dentalbürste **(2; 14; 28; 34)** mit einem aus einer verdrillten Drahtschleife **(5; 16; 33)** bestehenden Borstenträger **(1; 12)** und einem borstenlosen Endteil **(4; 11; 30)**, **dadurch gekennzeichnet**, daß der borstenlose Endteil **(4; 11; 30)** quer zur Achse des Borstenträgers **(1; 12)** liegende und in Längsrichtung des Borstenträgers **(1; 12)** federnde Auslenkungen **(10; 13; 29)** hat.

2. Dentalbürste **(2; 14; 28; 34)** nach Anspruch 1, **dadurch gekennzeichnet**, daß die Auslenkungen **(10; 13; 29)** in einer Ebene liegen.

3. Dentalbürste **(2; 14; 28; 34)** nach Anspruch 1 oder 2, **dadurch gekennzeichnet**, daß die Auslenkungen **(10; 13; 29)** zick-zack-, wellen-, oder mäanderförmig sind.

4. Dentalbürste **(2; 14; 34)** nach Anspruch 2, **dadurch gekennzeichnet**, daß die Auslenkungen **(10; 13)** zick-zackförmig sind.

5. Dentalbürste **(2)** nach einem der Ansprüche 1 bis 4, **dadurch gekennzeichnet**, daß der mit den Auslenkungen **(10)** versehene Endteil **(4)** derart geformt ist, daß er mit den Fingern zum Reinigen von Zahnzwischenräumen gehalten werden kann.

6. Dentalbürste **(14; 28; 34)** nach einem der Ansprüche 1 bis 4, **gekennzeichnet durch** einen den borstenlosen Endteil **(11; 30)** in einem schlitzförmigen Hohlraum **(15)** aufnehmenden Schaft **(3; 35)**.

7. Dentalbürste **(14; 28; 34)** nach Anspruch 6, **dadurch gekennzeichnet**, daß der borstenlose Endteil **(11; 30)** an seinem freien Ende im Schaft **(3; 35)** gegen Herausziehen gehalten ist.

8. Dentalbürste **(28)** nach Anspruch 7, **dadurch gekennzeichnet**, daß der borstenlose Endteil **(30)** an seinem freien Ende im Schaft **(3)** eingeleimt ist.

9. Dentalbürste **(28)** nach Anspruche 8, **gekennzeichnet durch** ein in den schlitzförmigem Hohlraum **(15)** mündendes Leimeinfülloch **(32)** in der Schaftwandung.

10. Dentalbürste **(14; 34)** nach Anspruch 6, **dadurch gekennzeichnet**, daß der Schaft **(3; 35)** ein quer in den schlitzförmigem Hohlraum **(15)** mündendes oder durch diesen hindurch verlaufendes Loch **(17)** hat, durch das ein durch eine der Auslenkungen **(13)** hindurchgreifender Stift **(19)** gesteckt ist.

## Claims

1. Dental brush (2; 14; 28; 34) having a bristle carrier (1; 12) consisting of a twisted wire loop (5; 16; 33) and a bristle-less end portion (4; 11; 30), characterised in that the bristle-less end portion (4; 11; 30) has deflections (10; 13; 29) which lie transversely to the axis of the bristle carrier (1; 12) and are resilient in the longitudinal direction of the bristle carrier (1; 12).

2. Dental brush (2; 14; 28; 34) according to Claim 1, characterised in that the deflections (10; 13; 29) lie in one plane.

3. Dental brush (2; 14; 28; 34) according to Claim 1 or 2, characterised in that the deflections (10; 13; 29) are zig-zagged, undulating or meandering.

4. Dental brush (2; 14; 34) according to Claim 2, characterised in that the deflections (10; 13) are zig-zagged.

5. Dental brush (2) according to any one of Claims 1 to (4), characterised in that the end portion (4) provided with the deflections (10) is formed in such a way that it can be held with the fingers for cleaning the spaces between teeth.

6. Dental brush (14; 28; 34) according to any one of Claims 1 to 4, characterised by a shaft (3; 35) accommodating the bristle-less end portion (11; 30) in a slot-like cavity (15).

7. Dental brush (14; 28; 34) according to Claim 6, characterised in that the bristle-less end portion (11; 30) is retained against withdrawal at its free end in the shaft (3; 35).

8. Dental brush (28) according to Claim 7, characterised in that the bristle-less end portion (30) is glued in the shaft (3) at its free end.

9. Dental brush (28) according to Claim 8, characterised by a glue filler hole (32), which leads into the slot-like cavity (15), in the shaft wall.

10. Dental brush (14; 34) according to Claim 6, characterised in that the shaft (3; 35) has a hole (17) which leads into the slot-like cavity (15) or extends through the latter and through which a pin (19) engaging through one of the deflections (13) is inserted.

## Revendications

1. Brosse dentaire (2 ; 14 ; 28 ; 34) munie d'un élément porte-soies (1 ; 12) constitué par une boucle torsadée (5 ; 16; 33) et d'une partie d'extrémité exempte de soies (4 ; 11 ; 30), caractérisée en ce que la partie d'extrémité exempte de soies (4 ; 11 ; 30) présente transversalement à l'axe de l'élément porte-soies (1 ; 12) des sinuosités (10 ; 13 ; 29) élastiques situées transversalement par rapport à l'axe de l'élément porte-soies (1 ; 12) et dans la direction longitudinale de l'élément porte-soies (1 ; 12).

2. Brosse dentaire (2 ; 14 ; 28 ; 34) selon la revendication 1, caractérisée en ce que les sinuosités (10 ; 13 ; 29) se situent dans un même plan.

3. Brosse dentaire (2 ; 14 ; 28 ; 34) selon la revendication 1 ou 2, caractérisée en ce que les sinuosités (10 ; 13 ; 29) sont en forme de zig-zag, d'ondulations ou de méandres.

4. Brosse dentaire (2 ; 14 ; 34) selon la revendication 2, caractérisée en ce que les sinuosités (10 ; 13) sont en forme de zig-zag.

5. Brosse dentaire (2) selon l'une des revendications 1 à 4, caractérisée en ce que la partie d'extrémité (4) munie de sinuosités (10) est formée de façon à pouvoir être maintenue avec les doigts de la main pour le nettoyage des espaces interdentaires.

6. Brosse dentaire (14 ; 28 ; 34) selon l'une des revendications 1 à 4, caractérisée par un fût (3 ; 35) recevant la partie d'extrémité exempte de soies (11 ; 30) dans un espace creux (15) en forme de fente.

7. Brosse dentaire (14 ; 28 ; 34) selon la revendication 6, caractérisée en ce que la partie d'extrémité exempte de soies (11 ; 30) est fixée sur son extrémité libre dans le fût (3 ; 35) pour l'empêcher d'en être extrait.

8. Brosse dentaire (28) selon la revendication 7, caractérisée en ce que la partie d'extrémité exempte de soies (30) est collée sur son extrémité libre dans le fût (3).

9. Brosse dentaire (28) selon la revendication 8, caractérisée par un trou de remplissage de colle (32) aboutissant dans l'espace creux en forme de fente (15) dans la paroi du fût.

10. Brosse dentaire (14 ; 34) selon la revendication 6, caractérisée en ce que le fût (3 ; 35) comporte un trou aboutissant transversalement dans l'espace creux en forme de fente (15) ou s'étendant à travers celui-ci, trou à travers lequel est enfoncée une tige (19) traversant une des sinuosités (13).
